# EUROPEAN PATENT APPLICATION

(11) **EP 4 641 409 A1**
(43) Date of publication of application: **29.10.2025**
(21) Application number: 25171990.2
(22) Date of filing: 23.04.2025
(51) Int. Cl.: G06F 16/9032, G06F 16/903, G06F 16/9035

(54) **CONVERSATIONAL AGNOSTIC MATCHMAKING MODEL ARCHITECTURE**

(30) Priority: 24.04.2024 US 202463638287 P
(71) Applicant: ADP, Inc., Roseland, NJ 07068 (US)
(72) Inventor: NASCIMENTO, Carlos, Roseland, 07068 (US); LEMOS, Willian, Roseland, 07068 (US); DAVILA, Bruno, Roseland, 07068 (US); FUKUOKA, Katsutoshi, Roseland, 07068 (US)
(74) Representative: Morrall, Jonathan Ian McLachlan

(57) **Abstract**

A system for matchmaking using a conversational agnostic matchmaking model is described. The system can receive a first query indicating a request for document objects and including criteria for selection of the document objects. The system can identify named entities from portions of the first query. The system can generate a second query to obtain the document objects, in response to the named entities being indicative of a context for the first query. The system can obtain the document objects according to the second query. The system can generate a reply to the first query including a description object and the documents, the description object based on the first query. The system can cause a user interface to present the reply to the first query and the description object.

## Description

### CROSS-REFERENCES TO RELATED APPLICATIONS

This application claims the benefit of priority under 35 U.S.C. § 119 to U.S. Provisional Patent Application No. 63/638,287, filed April 24, 2024, which is hereby incorporated by reference herein in its entirety.

### TECHNICAL FIELD

This application is generally related to computing technology, and particularly to querying or matching with descriptions.

### BACKGROUND

A computing system can be instructed to perform various searches through prompts received. Due to the specificity, and nuanced contexts of queries contained in the prompts received by the computing system, it can be challenging or error prone for the computer system to efficiently and reliably search for a match with the queries received, thereby introducing delays, latency, or utilizing unnecessary or excessive computing resources when excessive amounts of prompts are received.

### SUMMARY

Aspects of the technical solutions described herein are directed to a computing architecture with a matchmaking model that is conversationally agnostic. For example, due to the increasingly nuanced contexts and requests received by computing systems, it can be technically challenging for a matchmaking system to accurately and reliably interpret such requests and the associated context, let alone efficiently respond to such requests without utilizing excessive computation resources or latency due to suboptimal matches, especially in large or complex data sets. Thus, the conversationally agnostic matchmaking model computing architecture of the technical solutions described herein can provide a flexible computational approach configured to adapt to individual contexts and customized requests via multiple models tailored to various aspects of the workflow. Additionally, by including a conversational interface, the system can generate improved interactive user interfaces that can facilitate dynamically refining search criteria based on real-time input or feedback. A conversational agnostic matchmaking model (CAMM) architecture can achieve matchmaking across various domains through, for example, a chat interface. The architecture can use a plurality of models trained with machine learning to collectively match demanded vacancies with interests by interpreting conversational inputs or inputs in a conversational manner. This unique blend of information retrieval, named entity recognition, and a generative chat model ensures dynamic, context-sensitive, and accurate matchmaking. For example, a system according to this disclosure can identify highly relevant employment candidates to fill an open role, where the employment candidates are identified by first data structured according to one or more employment submission documents (e.g., resumé) and the role is defined by second data descriptive of the role.

A technical solution described herein is directed to an architecture driven by artificial intelligence (e.g., machine learning) that combines multiple elements for a nuanced matchmaking process. In an example, a system includes an advanced information retrieval system that intelligently filters data through context-based questions, enhancing the search process. The system can use a named entity recognition (NER) module to identify key entities for more precise matchmaking and to maintain relevant conversation context. In an example, a system incorporates four distinct machine learning models, managed by an orchestrating agent that selects the most appropriate model based on the context of the conversation. This flexible approach allows for technical improvement, for example to adapt to a wide range of user inquiries and scenarios, significantly improving the relevance and accuracy of matches. Thus, a technical solution for conversational agnostic matchmaking model architecture is provided.

At least one aspect is directed to a system. The system can include one or more processors, coupled with memory. The system can receive a first query indicating a request for one or more document objects and can include one or more criteria for selection of the one or more document objects. The system can identify one or more named entities from one or more portions of the first query. The system can generate a second query to obtain the one or more document objects, in response to the one or more named entities being indicative of a context for the first query. The system can obtain the one or more document objects according to the second query. The system can generate a reply to the first query that includes a description object and the one or more documents, the description object is based on the first query. The system can cause a user interface to present the reply to the first query and the description object.

At least one aspect is directed to a method. The method can include receiving a first query indicating a request for one or more document objects and can include one or more criteria for selection of the one or more document objects. The method can include identifying one or more named entities from one or more portions of the first query. The method can include generating a second query to obtain the one or more document objects, in response to the one or more named entities being indicative of a context for the first query. The method can include obtaining the one or more document objects according to the second query. The method can include generating a reply to the first query, which can include a description object and the one or more documents, the description object based on the first query. The method can include causing a user interface to present the reply to the first query and the description object.

At least one aspect is directed to a computer readable medium which may be non-transitory, that can include one or more instructions stored thereon and executable by a processor. The processor can receive a first query indicating a request for one or more document objects and can include one or more criteria for selection of the one or more document objects. The processor can identify one or more named entities from one or more portions of the first query. The processor can generate a second query to obtain the one or more document objects, in response to the one or more named entities being indicative of a context for the first query. The processor can obtain the one or more document objects according to the second query. The processor can generate a reply to the first query, which can include a description object and the one or more documents, the description object based on the first query. The processor can cause a user interface to present the reply to the first query and the description object.

### BRIEF DESCRIPTION OF THE FIGURES

These and other aspects and features of the present implementations are depicted by way of example in the figures discussed herein. Present implementations can be directed to, but are not limited to, examples depicted in the figures discussed herein. Thus, this disclosure is not limited to any figure or portion thereof depicted or referenced herein, or any aspect described herein with respect to any figures depicted or referenced herein.
FIG. 1 illustrates an example system of a conversational agnostic matchmaking model, according to some embodiments.
FIG. 2 illustrates an example computer execution architecture, according to some embodiments.
FIG. 3 illustrates an example computer execution workflow, according to some embodiments.
FIG. 4 illustrates an example method of conversational agnostic matchmaking model architecture, according to some embodiments.
FIG. 5 illustrates an example method of conversational agnostic matchmaking model architecture, according to some embodiments.
FIG. 6 illustrates an example flow diagram of a method of using a conversational agnostic matchmaking model, according to some embodiments.
FIG. 7 illustrates a block diagram of a computing system for implementing embodiments as described herein, according to some embodiments.

### DETAILED DESCRIPTION

Aspects of technical solutions are described herein with reference to the figures, which are illustrative examples of the technical solutions. The figures and examples below are not meant to limit the scope of the technical solutions to the present implementations or to a single implementation, and other implementations in accordance with present implementations are possible, for example, by way of interchange of some or all of the described or illustrated elements. Where certain elements of the present implementations can be partially or fully implemented using known components, only those portions of such known components that are necessary for an understanding of the present implementations are described, and detailed descriptions of other portions of such known components are omitted to not obscure the present implementations. Terms in the specification and claims are to be ascribed no uncommon or special meaning unless explicitly set forth herein. Further, the technical solutions and the present implementations encompass present and future known equivalents to the known components referred to herein by way of description, illustration, or example.

Aspects of the technical solutions described herein achieve matchmaking across various domains via an architecture employing a suite of advanced machine learning technologies in a conversational interface. For example, the system can utilize an information retrieval system that can provide documents according to a query and a context associated with the query. Thus, the system provides a technical improvement by actively interacting with users to gather context through queries intelligently crafted by the system to identify context that can improve matching results. This interaction helps in refining at least search indexing, making the system more adept at understanding and responding to user needs. For example, the information gathered is then stored in a knowledge base, which forms the foundation for the matchmaking process.

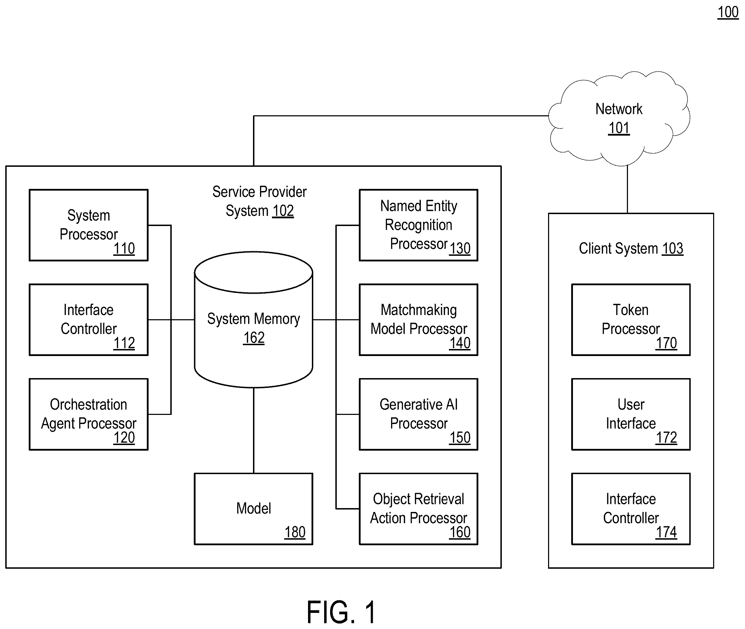

FIG. 1 depicts an example system, according to one or more aspects. As illustrated by way of example in FIG. 1, a system 100 can include at least a network 101, a service provider system 102, and a client system 103. In some examples, the system 100, according to an architecture as discussed herein, encompasses four distinct machine learning models, each serving a unique purpose in the matchmaking process. The system 100 can provide a combination of information / object retrieval, named entity recognition, a suite of machine learning models, and a conversational interface as a powerful tool for various applications, especially in scenarios requiring nuanced understanding and contextual adaptability.

The service provider system 102 can include a physical computer system operatively coupled or coupleable with one or more components of the system 100. The service provider system 102 can include a virtual computing system, an operating system, and a communication bus to effect communication and processing. The service provider system 102 can include a system processor 110, an interface controller 112, an orchestration agent processor 120, a named entity recognition processor 130, a matchmaking model processor 140, a generative artificial intelligence processor 150, an object retrieval action processor 160, and a system memory 162.

The system processor 110 can execute one or more instructions associated with the service provider system 102. The system processor 110 can include an electronic processor, an integrated circuit, or the like, including one or more of digital logic, analog logic, digital sensors, analog sensors, communication buses, volatile memory, nonvolatile memory, and the like. The system processor 110 can include, but is not limited to, at least one microcontroller unit (MCU), microprocessor unit (MPU), central processing unit (CPU), graphics processing unit (GPU), physics processing unit (PPU), embedded controller (EC), or the like. The system processor 110 can include a memory operable to store one or more instructions for operating components of the system processor 110 and operating components operably coupled to the system processor 110. For example, the one or more instructions can include one or more of firmware, software, hardware, operating systems, or embedded operating systems. The system processor 110 or the service provider system 102 generally can include one or more communication bus controller to effect communication between the system processor 110 and the other elements of the service provider system 102.

The interface controller 112 can facilitate the service provider system 102 to communicate electronically via the network 101. For example, the service provider system 102 can communicate with the client system 103. The interface controller 112 can include one or more communication interfaces. A communication interface can include, for example, an application programming interface ("API") compatible with a particular component of the service provider system 102, or the client system 103. The communication interface can provide a particular communication protocol compatible with a particular component of the service provider system 102, a particular component of the client system 103, or any other component. The communication interface can use a particular communication protocol compatible with a particular component of the data processing system 102. The communication interface may use the same or a different communication protocol when communicating with a particular component of the client system 103. The interface controller 112 can be compatible with particular content objects and can be compatible with particular content delivery systems corresponding to particular content objects, structures of data, types of data, or any combination thereof. For example, the interface controller 112 can be compatible with transmission of text data or binary data structured according to one or more metrics or data of the client system 103.

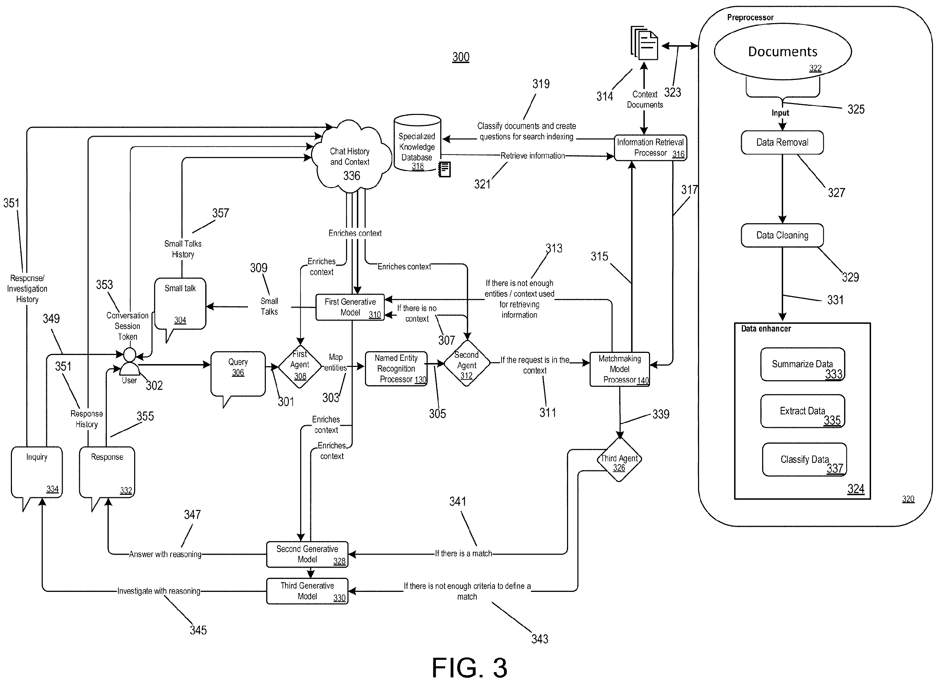

The orchestration agent processor 120 can oversee one or more of the named entity recognition processor 130, the matchmaking model processor 140, the generative artificial intelligence processor 150, and the object retrieval action processor 160, selecting the most appropriate one based on the conversation's context. For example, the orchestration agent processor 120 can interact with the named entity recognition processor 130, the matchmaking model processor 140, the generative artificial intelligence processor 150, and the object retrieval action processor 160 at one or more points in a workflow. For example, the workflow can correspond to the computer execution architecture of FIG. 3, but is not limited thereto.

One or more of the orchestration agent processor 120, the named entity recognition processor 130, the matchmaking model processor 140, the generative artificial intelligence processor 150, or the object retrieval action processor 160 can include or utilize one or more models 180 trained with machine learning. The orchestration agent processor 120, the named entity recognition processor 130, the matchmaking model processor 140, the generative artificial intelligence processor 150, or the object retrieval action processor 160 can use the same or different models trained with machine learning. For example, the models 180 can be trained with same or different types of machine learning techniques, trained with the same or different types of training data, or be trained or configured to receive different types of input or provide different types of output. Example machine learning techniques can include neural networks, such as a generative adversarial network (e.g., a generator neural network and a discriminator neural network that are trained simultaneously through adversarial training), a variational autoencoder (e.g., an autoencoder neural network that learns to generate new data samples by modeling the underlying probability distribution of the data), an autoregressive model, or other types of neural networks (e.g., deep learning models, convolution neural networks, recurrent neural networks, or transformers). Transformers can refer to or include a type of deep learning model architecture configured for natural language processing, including, for example, bidirectional encoder representations ("BERT"), generative pre-trained transformers, text-to-text transformer, transformer-XL, robustly optimized BERT, or distilled BERT. Other types of machine learning techniques can include supervised learning models, unsupervised learning models, semi-supervised learning models, or reinforcement learning models. For example, a supervised machine learning technique can include a support vector machine used for classification and regression tasks. Given a set of labeled training data, a support vector machine can identify the hyperplane that separates the data into classes with the largest possible margin (e.g., distance between the hyperplane and nearest data points from each class).

Model 180 can include any number of machine learning models, such as generative artificial intelligence models, which can include machine learning systems configured to detect intent of requests and prompts by learning patterns and structures from existing data.

Model 180 can include any machine learning models trained to generate responses to queries, initiate conversations with users, or enrich chat context using chat history or chat context. Model 180 can be a neural network, a natural language processing model, a feature extraction algorithm, or a combination thereof. Model 180 can be configured or trained by a Machine learning (ML) trainer to receive different types of input or provide different types of output

Model 180 can include any combination of hardware and software for obtaining the intent from input. The input can include natural language inputs. The model 180 can include one or more of: neural networks, decision-making models, linear regression models, natural language models, random forests, classification models, generative artificial intelligence (AI) models, reinforcement learning models, clustering models, neighbor models, decision trees, probabilistic models, classifier models, any other type and form of models, or a combination thereof. The model 180, can include, for example, natural language processing (e.g., support vector machine (SVM), Bag of Words, Counter Vector, Word2Vec, k-nearest neighbors (KNN) classification, long short-term memory (LSTM)), RNN based long short term memory (LSTM), Hidden Markov Models, You Only Look Once (YOLO), LayoutLM) (classification ad clustering models (e.g., random forest, XGBBoost, k-means clustering, DBScan, isolation forests, segmented regression, sum of subsets 0/1 Knapsack, Backtracking, Time series, transferable contextual bandit) or other models such as named entity recognition, term frequency-inverse document frequency (TF-IDF), stochastic gradient descent, Naive Bayes Classifier, cosine similarity, multi-layer perceptron, sentence transformer, data parser, conditional random field model, Bidirectional Encoder Representations from Transformers (BERT), among others.

Model 180 can include generative AI models, also referred to as generative AI models 180, which can include any machine learning systems configured to create new content, such as text, images, or audio, by learning patterns from the data stored in a storage or a database (e.g., training datasets). The generative AI models 180 can be trained using techniques such as supervised learning, unsupervised learning, and reinforcement learning. Generative AI models 180 can utilize a dataset from the stored data to create logical inferences between various complex structures in the dataset to generate coherent outputs for several prompts input into the models 180.

Model 180 implemented as one or more generative AI models can include any machine learning (ML) or AI model designed to generate content or new content, such as text, images, or code, by learning patterns and structures from existing data. Such models 180 (e.g., a generative AI models) can include any model, a computational system or an algorithm that can learn patterns from data (e.g., chunks of data from various input images, videos, documents, computer code, templates, forms, etc.) and make predictions or perform tasks without being explicitly programmed to perform such tasks. The generative AI model 180 can include, utilize or refer to a large language model. The generative AI model 180 can be trained using a dataset of documents (e.g., text, images, videos, audio or other data). The generative AI model 180 can be designed to understand and extract relevant information from the dataset. The generative AI model 180 can leverage natural language processing techniques and pattern recognition to comprehend the context and intent of a prompt (e.g., one or more instructions), which can be used as input into the model 180 to trigger the desired output or result.

Model 180, including for example a generative AI model, can be designed, constructed, utilize or include a transformer architecture with one or more of a self-attention mechanism (e.g., allowing the model to weigh the importance of different words or tokens in a sentence when encoding a word at a particular position), positional encoding, encoder and decoder (multiple layers containing multi-head self-attention mechanisms and feedforward neural networks). For example, each layer in the encoder and decoder can include a fully connected feed-forward network, applied independently to each position. The service provider system 102 can apply layer normalization to the output of the attention and feed-forward sub-layers to stabilize and improve the speed with which the generative AI model 180 is trained. The service provider system 102 can leverage any residual connections to facilitate preserving gradients during backpropagation, thereby aiding in the training of the deep networks. Transformer architecture can include, for example, a generative pre-trained transformer, a bidirectional encoder representation from transformers, transformer-XL (e.g., using recurrence to capture longer-term dependencies beyond a fixed-length context window), text-to-text transfer transformer, among others.

The generative artificial intelligence processor 150 can include or host the model 180. The generative artificial intelligence processor 150 can include graphic processing units, tensor processing units, field-programmable gate arrays, application-specific integrated circuits, or central processing units. The generative artificial intelligence processor 150 can host a generative artificial intelligence model, a neural network model, a transformer model, or a combination thereof.

The system memory 162 can store data associated with the system 100, service provider system 102, or a combination thereof. The service provider system 102 includes the system memory 162. The system memory 162 can be a computer-readable memory that can store or maintain any of the information described herein. The system memory 162 can maintain one or more data structures, which may contain, index, or otherwise store each of the values, pluralities, sets, variables, vectors, numbers, or thresholds described herein. The system memory 162 can be accessed using one or more memory addresses, index values, or identifiers of any item, structure, or region maintained in the system memory 162. The system memory 162 can be accessed by the components of the service provider system 102, or any other computing device described herein, via the network 101. In some implementations, the system memory 162 can be internal to the service provider system 102. In some implementations, the system memory 162 can exist external to the service provider system 102 and may be accessed via the network 101. For example, the system memory 162 may be distributed across many different computer systems (e.g., a cloud computing system) or storage elements and may be accessed via the network 101 or a suitable computer bus interface.

The service provider system 102 can store, in one or more regions of the memory of the service provider system 102, or in the system memory 162, the results of any or all computations, determinations, selections, identifications, generations, constructions, or calculations in one or more data structures indexed or identified with appropriate values. Any or all values stored in the system memory 162 may be accessed by any computing device described herein, such as the service provider system 102, to perform any of the functionalities or functions described herein. In implementations where the system memory 162 forms a part of a cloud computing system, the system memory 162 can be a distributed storage medium in a cloud computing system and can be accessed by any of the components of the service provider system 102, by the one or more client systems 103 (e.g., via the user interface 172, etc.), or any other computing devices described herein.

The client system 103 can include a computing system. In some examples, the client system 103 can be associated with a database system. For example, the client system 103 can correspond to a cloud system, a server, a distributed remote system, or any combination thereof. For example, the client system 103 can include an operating system to execute a virtual environment. The operating system can include hardware control instructions and program execution instructions. The operating system can include a high-level operating system, a server operating system, an embedded operating system, or a boot loader. The client system 103 can include a token processor 170, a user interface 172, and an interface controller 174.

The token processor 170 can generate or provide a token associated with a user of the user interface 172 at the client system 103. For example, the token processor 170 can provide a token associated with a given user to the service provider system 102. For example, the service provider system 102 or the orchestration agent processor 120 can obtain or filter data corresponding to context based on the token. For example, the token processor 170 can indicate a given subset of data that is restricted or not restricted according to the user associated with the token or the token itself. For example, the filtered data can be filtered chat history or filtered documents as discussed herein, but is not limited thereto. In some examples, the token associated with a user of the user interface 172 can correspond to a cryptographic token that is a unique identifier of the user or a device associated with the user. The cryptographic token can have a structure distinct from one or more tokens associated with a natural language processor, as discussed herein.

The user interface 172 can include one or more devices to receive input from a user or to provide output to a user. For example, the user interface 172 can correspond to a display device to provide visual output to a user. The display device can display at least one or more presentations as discussed herein, and can include an electronic display. An electronic display can include, for example, a liquid crystal display (LCD), a light-emitting diode (LED) display, an organic light-emitting diode (OLED) display, or the like. The display device can receive, for example, capacitive or resistive touch input. The display device can be housed at least partially within the client system 103. Additionally, or alternatively, the user interface 172 can include one or more user input devices to receive input from the user. For example, the input devices can include a keyboard, a mouse, a touch-sensitive panel of the display device, or any such input device or a combination thereof. 103.

The interface controller 174 can facilitate the client system 103 to communicate electronically via the network 101. For example the client system 103 can communicate with the service provider system 102. The interface controller 174 can include one or more communication interfaces. A communication interface can include, for example, an application programming interface ("API") compatible with a particular component of the service provider system 102, the client system 103, or any other component. The communication interface can use a particular communication protocol compatible with a particular component of the service provider system 102. The communication interface may use the same or a different communication protocol when communicating with a particular component of the client system 103. The interface controller 174 can be compatible with particular content objects and can be compatible with particular content delivery systems corresponding to particular content objects, structures of data, types of data, or any combination thereof. For example, the interface controller 174 can be compatible with transmission of text data or binary data structured according to one or more metrics or data of the service provider system 102.

The network 101 can include any type or form of network. The geographical scope of the network 101 can vary widely and the network 101 can include a body area network (BAN), a personal area network (PAN), a local-area network (LAN), e.g., Intranet, a metropolitan area network (MAN), a wide area network (WAN), or the Internet. The topology of the network 101 can be of any form and can include, e.g., any of the following: point-to-point, bus, star, ring, mesh, or tree. The network 101 can include an overlay network, which is virtual and sits on top of one or more layers of other networks 101. The network 101 can be of any such network topology as known to those ordinarily skilled in the art, capable of supporting the operations described herein. The network 101 can utilize different techniques and layers or stacks of protocols, including, e.g., the Ethernet protocol, the Internet protocol suite (TCP/IP), the ATM (Asynchronous Transfer Mode) technique, the SONET (Synchronous Optical Networking) protocol, or the SD (Synchronous Digital Hierarchy) protocol. The TCP/IP Internet protocol suite can include application layer, transport layer, Internet layer (including, e.g., IPv6), or the link layer. The network 101 can include a broadcast network, a telecommunications network, a data communication network, or any other type of computer network.

In some examples, the orchestration agent processor 120 can act as a decision-maker, ensuring that the conversation flows smoothly and relevantly. For example, the orchestration agent processor 120 can include one or more interfaces to detect input at various portions of a workflow (e.g., the example workflow of FIG. 3), and can provide output responsive to specific portions of a workflow. The orchestration agent processor 120 can receive input from one or more of the interface controller 112, the named entity recognition processor 130, the matchmaking model processor 140, the generative artificial intelligence processor 150, or the object retrieval action processor 160, can determine a level of context, can enrich a level of context, and can control at least one of the interface controller 112, the named entity recognition processor 130, the matchmaking model processor 140, the generative artificial intelligence processor 150, or the object retrieval action processor 160 to take one or more actions according to a query having context that satisfies a context threshold of the orchestration agent processor 120.

For example, the orchestration agent processor 120 can obtain a query via the interface controller 112 indicative of user input, can determine whether the query has sufficient context, can augment the query with additional context if the context is not sufficient, and can provide the query with sufficient context to one or more of the interface controller 112, the named entity recognition processor 130, the matchmaking model processor 140, the generative artificial intelligence processor 150, or the object retrieval action processor 160 according to, but not limited to, the workflow of FIG. 3. In one example, the orchestration agent processor 120 can augment the context according to data indicative of a chat history, in response to receiving the first query. The orchestration agent processor 120 can augment the query by inputting data from the chat history to the model 180 to cause the model 180 to add data elements to the context so that there is sufficient context. As discussed herein, sufficient context corresponds to a context that satisfies a given threshold with respect to a number of data elements can be associated with the query. For example, a threshold can correspond to five data elements, and a query associated with at least five data elements can be considered to have sufficient context. For example, additional context as discussed herein can correspond to at least one data element. The data element can include, but it not limited to, information associated with content of a query. For example, a query can include a name of a person or business, and a data element corresponding to additional context can include postal address, an email address, or a telephone number for the person or business.

In another example, the orchestration agent processor 120 can augment the context according to data indicative of a chat history in response to identifying the one or more named entities. The orchestration agent processor 120 can augment the context by analyzing the chat history associated with the one or more named entities and add data elements based on the analysis to the query so that the query has sufficient context. For example, the one or named entities can include names, usernames in the client system 103, or names that are in the one or more document objects. The orchestration agent processor 120 can analyze the chat history by inputting the chat history into a model trained with machine learning (e.g., model 180) and generating, using the model trained with machine learning, additional context for the query.

In another example, the orchestration agent processor 120 can receive a first query indicating a request for one or more document objects and including one or more criteria for selection of the one or more document objects. In an example, the request for one or more document objects can include a request for job postings, job descriptions, resumes, cover letters, recommendations, any sort of document, or a combination thereof. The first query can be or include a network operation. The document object can include a resume, a job listing, a cover letter, data, or a combination thereof. The criteria for selection of the one or more document objects can include one or more levels of sophistication of a project, one or more levels of sophistication of a job, one or levels of experience of an individual, prior job experience or a combination thereof. In some examples, prior job experience can include one year, one or more years, ten years, fifteen years or more experience, or a combination thereof.

The named entity recognition processor 130 can identify and categorize named entities within the conversation, aiding in understanding the context and refining the matchmaking process. In some examples, the named entity recognition processor 130 can include a natural language processor that can receive input corresponding to text, image, or video data, and can generate one or more text objects corresponding to the text, image or video data. The natural language processor can include indicators (e.g., tokens) that can identify a given portion of a query as indicative of a named entity or not indicative of a named entity. For example, a named entity can correspond to a proper noun identifying a person, place, or entity, but is not limited thereto.

In another example, the named entity recognition processor 130 can identify one or more named entities from one or more portions of the first query. For example, the named entity recognition processor 130 can utilize, include or operate a named entity recognition (NER) model. The named entity recognition processor can identify one or more named entities by using the named entity recognition model to analyze the first query. The named entity recognition model can include models that are trained with machine learning, SpaCY, Azure AI language, OpenAI GPT models, any such models, or a combination thereof.

In another aspect, the named entity recognition processor 130 can determine whether the one or more named entities are indicative of the context for the first query. For example, the named entity recognition processor 130 can determine whether one or more named entities are indicative of the context for the first query by matching a user of the client system 103 with one or more named entities identified.

In some examples, the system 100, or the service provider system 102 has an ability to assess the suitability of potential matches based on a configurable percentage of criteria alignment. As discussed herein, a suitability of a match can be indicative of a semantic relationship between one or more of a query, a context of the query, and a response to the query. For example, a semantic relationship can indicate a correspondence between a domain of a query and a domain of a response to the query, but is not limited thereto. This flexibility allows the system to be tailored to specific scenarios, enhancing its applicability across various domains. In some examples, a percentage of criteria alignment can correspond to a threshold indicative of a percentage of terms (e.g., portions of a query) that are associated with a given object (e.g., a given named entity). For example, the named entity recognition processor 130 can determine, according to a natural language processor, that one or more portions of a query (e.g., one or more words or alphanumeric strings) are semantically associated with a given named entity. For example, the named entity recognition processor 130 can determine from a query of "what is in the neighborhood of the home of John Smith?" that the portions "neighborhood" and "home" are associated with the named entity "John Smith." In some examples, the named entity recognition processor 130 can determine a threshold percentage of terms that are associated with the named entity, a threshold number of terms that are associated with the named entity, or a combination thereof, to indicate that the query has sufficient context as discussed herein. For example, the named entity recognition processor 130 can determine an alignment threshold of at least 80% of terms being associated with at least one named entity to determine that a query has sufficient context. The named entity recognition processor 130 can provide a plurality of alignment thresholds, each corresponding to a given domain, to provide a technical improvement to support contextual understanding and augmentation across a broad variety of domains that have varying complexities in search traversal or database retrieval.

In some examples, the matchmaking model processor 140 can identify objects (e.g., documents, resumes, cover letters, etc.) that correspond to or are semantically related to a query. For example, the matchmaking model processor 140 can incorporate an investigative approach to matchmaking that includes semantic similarity searches. In a semantic similarity search, the system interprets and identifies context beyond literal keyword matches. This capability allows the matchmaking model processor 140 to understand and respond to complex user requests with a high degree of accuracy. In some examples, the matchmaking model processor 140 can obtain one or more tokens associated with a query according to a natural language processor as discussed herein. For example, the matchmaking model processor 140 can generate one or more tokens associated with a query according to a natural language processor as discussed herein. In some examples, the matchmaking model processor 140 can obtain one or more tokens associated with one or more documents according to a natural language processor as discussed herein. For example, the matchmaking model processor 140 can generate one or more tokens associated with a query according to a natural language processor as discussed herein. For example, the matchmaking model processor 140 can perform a search of one or more tokens of the query against one or more tokens of one or more documents to match documents to the query. By the technical solution of token-based searching and matching, the matchmaking model processor 140 can provide a technical improvement at least to perform a semantic similarity search returning responses having higher accuracy and relevance.

The matchmaking model processor 140 can pre-process the one or more documents matching the query. In some examples, the matchmaking model processor 140 can identify objects (e.g., documents, resumes, cover letters, etc.) that correspond to the query (e.g., a job description). In this example, the matchmaking model processor 140 can use the query to search a candidate database to search for candidates that are located within a predetermined distance of a job location indicated by the query. In another example, the matchmaking model processor 140 can match candidates from a candidate database with the query. In some examples, the one or more documents can include or be one or more document objects. In some examples, the one or more documents can be formatted as a portable document format (PDF), JavaScript Object Notation (JSON) format, any such text file formats, or a combination thereof. In some examples, the matchmaking model processor 140 can pre-process the documents by summarizing the data of the documents and extracting the skills from the summary of the data. In some examples, the matchmaking model processor 140 can pre-process the documents by reducing the noise of the data extracted from the documents. In some examples, the matchmaking model processor 140 can pre-process the one or more documents by removing personal identifiable information contained in the one or more documents. In some examples, the matchmaking model processor 140 can clean the data in the one or more documents. In some examples, the matchmaking model processor 140 can clean the data by removing special characters and data that is not relevant to the query. In some examples, the matchmaking model processor 140 can provide the one or more documents to the generative artificial intelligence processor 150 to enhance the one or more documents. In some examples, the generative artificial intelligence processor 150 can extract data from the one or more documents and generate enhancements of the one or more documents. In an example, the generative artificial intelligence processor 150 can generate enhancements of the one or more documents by summarizing an aspect of the document. For example, the one or more documents can include a resume or a cover letter, and the aspect of the document can include an employment candidate linked to the resume or cover letter. In an example, the enhancement can include a summarization of the employment candidate using one or more documents provided by the matchmaking model processor 140. The summarization can include the candidates' experience, skills, and industry. In some examples, the enhancement can include adding skills to the one or more documents that are extracted from the text of the one or more documents. In some examples, the enhancement can include classifying which industry the individual works for based on employment candidate experience content.

In another example, the matchmaking model processor 140 can classify the one or more documents matching the query and create questions for search indexing. In this example, the matchmaking model can provide the classifications of the documents, the one or more documents and the questions to a specialized knowledge database. In this example, the matchmaking model processor 140 can curate the data it provides to the specialized knowledge database such that the data in each specialized knowledge database is related to a task assigned to the matchmaking model processor 140. The specialized knowledge database is specialized because it contains data that is curated to queries received by the service provider system 102. Further, the specialized knowledge database is specialized because it contains context that is relevant or corresponds to the context determined by one or more components of the service provider system 102. In some examples, the specialized knowledge database is specialized because it contains data that has been curated beforehand. In some examples, the specialized knowledge database is specialized because it can include highly specific data that corresponds to a task assigned to the matchmaking model processor 130.

In some examples, the generative artificial intelligence processor 150 can generate output indicative of a reasoning for selection of the match and can generate further queries to the user to obtain information that can be used to identify a match with one or more objects. For example, the generative artificial intelligence processor 150 can come into play when there is no immediate match, engaging in small talk to further investigate and understand the needs of the user, and to thus generate or obtain data indicative of the context of the query. Once a match is identified, the generative model provides reasoned responses, explaining why a particular match is suitable. In some examples, the generative artificial intelligence processor 150 can include a generative artificial intelligence model, the model 180, or can include one or more interfaces according to the interface controller 112 to perform bidirectional communication with a model 180 external to the system 100. The conversational interface of the generative artificial intelligence processor 150 can employ a generative model for reasoning, allowing for dynamic and context-aware interactions. This model enables the service provider system 102 to not only respond to user inputs but also to evolve the conversation based on those inputs. In some examples, the model 180 can include or be the generative model employed by the generative artificial intelligence processor 150. The conversational interface can constantly update the context history, feeding this information back into the system for refined decision-making. This iterative process ensures that the matchmaking is not only based on static criteria but also evolves as the conversation progresses, achieving a technical improvement in responsiveness and accuracy beyond the capability of manual processes to achieve.

The object retrieval action processor 160 can return documents (e.g., resumes) and can provide information corresponding to various documents. For example, in cases where the user seeks more information or expresses dissatisfaction with a recommendation, the conversational interface can respond with detailed information drawn from the context documents. This capability provides technical improvements that enrich the user experience and also enhance the accuracy of each of the processors 130, 140, 150 and 160, contributing to more accurate future recommendations. In some examples, the object retrieval action processor 160 can return documents associated with one or more tokens that match or correspond to one or more tokens of a query as discussed herein. In some examples, the object retrieval action processor 160 can receive context documents (e.g., projects, resumes, or job descriptions), and then classify the context documents and create questions for search indexing. For example, the questions can be stored in the system memory 162 (e.g., a specialized knowledge database). For example, the object retrieval action processor 160 retrieves information from the knowledge database, and provides the retrieved information to the matchmaking model processor 140. The specialized knowledge database can include one or more specialized knowledge databases, where each specialized knowledge database can be relevant to the query or the context documents. In some examples, the specialized knowledge database can include data that is relevant to the query. In some examples, the specialized knowledge database can format data as vectors that represent the data. The specialized knowledge database can include an indexing structure. In some examples, the indexing structure can be or include graph-based structures, hash-based structures, tree-based structures, or quantization-based structures. In some examples, the object retrieval action processor 160 can curate data or to be inputted in the specialized knowledge base using past queries, or context documents. In some examples, the object retrieval action processor 160 can retrieve information from the specialized knowledge database using search algorithms. In some examples, the search algorithms can include Hierarchical Navigable Small World, Locality-Sensitive Hashing, KD-Trees, Product Quantization, Approximate Nearest Neighbors Oh Yeah, Fast library for Approximate Nearest Neighbors, any other such search algorithms, or a combination thereof. The matchmaking model processor 140 can curate each specialized knowledge database to correspond to one or more queries received by the service provider system 102. In some examples, the matchmaking model processor 140 can curate the specialized knowledge database by using previously provided queries and documents to data to the one or more specialized knowledge databases.

In another example, the object retrieval action processor 160 can retrieve information using a search engine and provide the retrieved information to the matchmaking model processor 140. In some examples, the search engine can include third party search engines. In some examples, the object retrieval action processor 160 can access the search engine via the network 101.

In some examples, the object retrieval action processor 160 can provide the documents associated with one or more tokens that match or correspond to one or more tokens of a query, as described herein, to the model 180. In this aspect, the model 180 can generate a JSON file of the documents and remove personal identifiable information contained in the documents. Further, the model 180 can clean the data or content of the documents. In an example, the model 180 can clean the data or content of the documents by removing special characters or irrelevant data from the documents. In an example, the model 180 can enhance the data contained in the documents. For example, the model 180 can enhance the data contained in the document (e.g., a resume) by generating a candidate summary, a skill extraction, or an industry classification. In this example, the candidate summary can include a summarization of one or more candidate experiences, skills, and industry in order to have a comprehensive, lightweight, and optimized representation for a search index. In another example, the skill extraction can include an extraction of skills from the candidate experience and ensure the skills from the candidate experience are explicitly described within a candidate resume to clean up redundancy and miss-extraction. In another example, industry classification can include the model 180 extracting the industry classification service from the one or more documents based in the candidate experience content using a list of one or more possible industries. In some examples, the possible industries can include accommodation and food services, administrative and support services, agriculture, forestry, fishing, and hunting, arts, entertainment, and recreation, construction, educational services, finance and insurance, government, health care and social assistance, information, management of companies and enterprises, manufacturing, mining, quarrying, and oil and gas extraction, other services, professional, scientific, and technical services, real estate and rental and leasing, retail trade, transportation and warehousing, utilities, wholesale trade, public administration, any other industry, or a combination thereof. In some examples, data can be considered irrelevant if it is not indicative of a threshold percentage semantic relationship with the query. The threshold percentage semantic relationship can include seventy percent, eighty percent, or can be a number (e.g., 0.6, 74, etc.). In some examples, the personal identifiable information can include one or more names, one or more addresses, one or more companies, one or more universities, one or more email addresses, one or more genders, one or more ethnicities, one or more social numbers, any such other personal identifiable information, or a combination thereof.

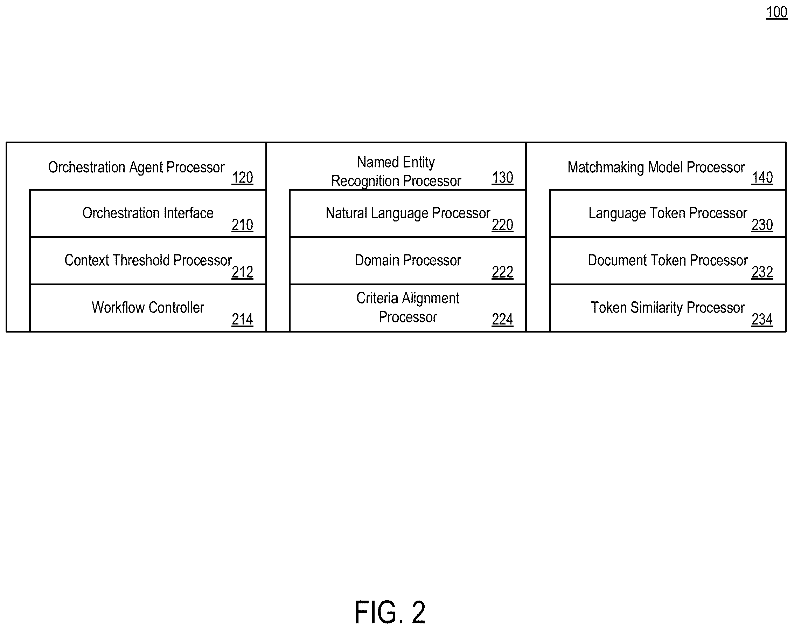

FIG. 2 depicts an example computer execution architecture, according to this disclosure. As illustrated by way of example in FIG. 2, a computer execution architecture 200 can be one or more instructions stored at the system memory 162 to cause one or more components of the system 100, the service provider system 102, the client system 103, or any combination thereof, but is not limited thereto. For example, the computer execution architecture 200 can include computational hardware or software integrated with the orchestration agent processor 120, the named entity recognition processor 130, and the matchmaking model processor 140, as illustrated in Fig. 2 by way of nonlimiting example. The orchestration agent processor 120 can include an orchestration interface 210, a context threshold processor 212, and a workflow controller 214. The named entity recognition processor 130 can include a natural language processor 220, a domain processor 222, and a criteria alignment processor 224. The matchmaking model processor 140 can include a language token processor 230, a document token processor 232, and a token similarity processor 234.

The orchestration interface 210 can include one or more communication channels coupled with one or more of the named entity recognition processor 130, the matchmaking model processor 140, the generative artificial intelligence processor 150, and the object retrieval action processor 160. For example, the orchestration interface 210 can transmit and receive bidirectional communication with one or more of the named entity recognition processor 130, the matchmaking model processor 140, the generative artificial intelligence processor 150, and the object retrieval action processor 160, or any component thereof. For example, the orchestration interface 210 can include one or more hardware communication traces or software APIs to interconnect with one or more of the components discussed above, but is not limited thereto.

The context threshold processor 212 can store or obtain one or more context thresholds indicative of sufficient context as discussed herein, and can determine whether a query satisfies a given threshold that indicates sufficient context. For example, the context threshold processor 212 can store a plurality of thresholds, each associated with a distinct domain. In some examples, different domains may require or benefit from differing levels of context to provide accurate responses, and increasing a threshold for satisfying sufficient context can increase computational resources or energy required as to the context threshold processor 212. Thus, the context threshold processor 212 can provide domain-specific context to optimize resource allocation and maintain high accuracy. For example, a query can be associated with a human resources domain, which may require a high level of context to ensure that employee information is shared only with authenticated and authorized recipients or devices. For example, a query can be associated with a weather domain, which may operate accurately with a low level of context because of the less sensitive nature of the information required (e.g., geolocation). A level of context, as discussed herein, can correspond to a context threshold that indicates a given amount of additional context.

The workflow controller 214 can receive output of one or more components of the service provider system 102 and can provide instructions to the one or more components of the service provider system 102 to execute a workflow, including but not limited to the example workflow of FIG. 3. For example, the workflow controller 214 can execute one or more instructions from the orchestration agent processor 120 to make various determinations, decisions, comparisons, or any combination thereof as discussed herein, but is not limited thereto.

The natural language processor 220 can determine one or more properties of an input that correspond to a natural language. For example, a natural language as discussed herein can correspond to a human language (e.g., English, Spanish) but is not limited thereto. A natural language can have a semantic structure in which individual words, collections of words (e.g., phrases), or relative positions of words (e.g., word order) can indicate semantic meaning. The natural language processor 220 can receive input in the natural language (e.g., an English-language text string) and can output a data structure including one or more tokens indicative of the semantic meaning of a portion of the string. For example, the natural language processor 220 can tokenize a query or a document to identify one or more named entities in the query or the document, and one or more semantic relationships between portions of the input (e.g., adjectives, verb modifiers, etc.). The domain processor 222 can identify at least one domain associated with a query or a document. For example, the domain processor 222 can identify one or more token in a query or a document, and can determine that the query or the document is associated with a given domain based on the presence of one or more words, tokens, phrases, or any combination thereof in the query or the document.

The criteria alignment processor 224 can determine that a query has sufficient context with respect to a domain, or on a domain-agnostic basis, based on one or more alignment thresholds. In some examples, the criteria alignment processor 224 can select an alignment threshold that is associated with a given domain. For example, an alignment threshold having a value of 20% can be associated with a weather domain, and an alignment threshold having a value of 80% can be associated with an employee records domain. For example, in the employee records domain, the criteria alignment processor 224 can determine an alignment threshold of at least 80% of terms being associated with at least one named entity to determine that a query has sufficient context. For example, a default or domain-agnostic alignment threshold having a value of 50% can be associated with a query whose domain is unknown or cannot be determined. Thus, the criteria alignment processor 224 can provide a technical improvement to support contextual understanding and augmentation across a broad variety of domains that have varying complexities in search traversal or database retrieval.

The language token processor 230 can determine one or more semantic properties associated with a query, based on the tokens of the query. For example, the language token processor 230 can cause the natural language processor 220 to generate one or more tokens for a query in response to receiving input from a user device, including a query. For example, the language token processor 230 can cause the natural language processor 220 to generate the one or more tokens in real-time or substantially real-time (e.g., in less than 100 milliseconds), for each query received. The language token processor 230 can augment one or more of the tokens of the query with one or more additional predetermined tokens that are associated with the type of token or tokenized word or phrase, to expand the semantic meaning of the token. For example, the language token processor 230 can augment a token for a verb or noun with tokens indicating synonyms of that verb or noun. For example, the language token processor 230 can augment a token for a named entity with tokens describing properties or associations of the named entity. The language token processor 230 can augment one or more portions of text of the query with one or more additional predetermined tokens that are associated with the type of token or tokenized word or phrase, to expand the semantic meaning of the token. For example, the language token processor 230 can augment a word or phrase with tokens indicating related or alternative phrases. For example, the language token processor 230 can augment text of "New York" with text describing "city" or "state" as disambiguations.

The document token processor 232 can determine one or more semantic properties associated with a document, based on the tokens of the document. For example, the document token processor 232 can cause the natural language processor 220 to generate one or more tokens for a document in response to receiving a document at a database. For example, the document token processor 232 can cause the natural language processor 220 to generate the one or more tokens in a batch process that executes periodically on a database including documents. The document token processor 232 can augment one or more of the tokens of the document with one or more additional predetermined tokens that are associated with the type of token or tokenized word or phrase, to expand the semantic meaning of the token. For example, the document token processor 232 can augment a token for a verb or noun with tokens indicating synonyms of that verb or noun. For example, the document token processor 232 can augment a token for a named entity with tokens describing properties or associations of the named entity. The document token processor 232 can augment one or more portions of text of the query with one or more additional predetermined tokens that are associated with the type of token or tokenized word or phrase, to expand the semantic meaning of the token. For example, the document token processor 232 can augment a word or phrase with tokens indicating related or alternative phrases. For example, the document token processor 232 can augment text of "New York" with text describing "city" or "state" as disambiguations.

The token similarity processor 234 can determine a match or correspondence between a query and one or more documents based at least on comparisons of one or more tokens or augmented tokens of a query with one or more tokens or augmented tokens of one or more documents. For example, the token similarity processor 234 can traverse each word, token, augmented token, phrase, or any combination thereof, of a query, to identify a match with any word, token, augmented token, phrase, or any combination thereof, of one or more documents. The token similarity processor 234 is not limited to matching objects of a same type. For example, the token similarity processor 234 can return a match between a token and an augmented token, a word string and a token, or any other permutation of the above-noted examples, but is not limited thereto. Thus, the token similarity processor 234 can provide a technical improvement to return documents that are similar to a query based on a diverse set of matching criteria that can be tailored to a given domain.

FIG. 3 depicts an example computer execution workflow, according to this disclosure. As illustrated by way of example in FIG. 3, a computer execution workflow 300 can include one or more instructions stored at the system memory 162 to cause one or more components of the system 100, the service provider system 102, the client system 103, or any combination thereof, but is not limited thereto. The computer execution workflow 300 can include a named entity recognition processor 130 (e.g., of FIG. 1), a matching model processor 140 (e.g., of FIG. 1), a user 302, a small talk 304, a query 306, a first agent 308, a first generative model 310, a second agent 312, context documents 314, an information retrieval processor 316, a specialized knowledge database 318, a preprocessor 320, documents 322, a data enhancer 324, a third agent 326, a second generative model 328, a third generative model 330, a response 332, an inquiry 334, or a chat history and context 336. The first agent 308, the second agent 312, or the third agent 326 can be implemented by an orchestration agent processor 120 (e.g., of FIG. 1). The first agent 308, the second agent 312, or the third agent 326 can perform all the operations or features of the orchestration agent processor 120. The first generative model 310, the second generative model 328, or the third generative model 330 can be implemented by a model 180 or a generative artificial intelligence processor 150. The first generative model 310, the second generative model 328, or the third generative model 330 can perform all the operations or features of the model 180 or the generative artificial intelligence processor 150. The preprocessor 320 can be implemented by the system processor 110, model 180 or a combination thereof. The chat history and context 336 can include the model 180, system memory 162, or be located in a database accessible via the network 101. The chat history and context can be accessible via the network 101.

In an example workflow, at operation 351, a computing device associated with a user 302 transmits a conversation session token (e.g., a cryptographic token as discussed herein). At operation 309, a first generative model can generate a small talk 304. For example, the small talk 304 can include text such as "Isn't it a nice day, John! What are you looking for?". Further, at operation 309, the first generative model can provide the small talk 304 to the user 302 in order to encourage user input from the user 302. At operation 301, a computing device associated with a user 302 transmits a user input, including a query 306, to a first agent 308. For example, the query 306 can include text such as "I'm John and I'm looking for a project that has no specific skills." At operation 303, the first agent 308 can map one or more entities and provide the query to the named entity recognition processor 130. For example, mapping entities can correspond to instructing the named entity recognition processor 130 via the workflow controller 214 (e.g., of FIG. 2) to tokenize the query to identify named entities. For example, the named entity recognition processor 130 can identify named entities including a "name" named entity having the value "John," "skills" named entity having the value "no specific," an "instruction" named entity having the value "looking for," and "interests" named entity having the value "project."

At operation 305, the second agent 312 can receive the output of the named entity recognition processor 130, and determine whether sufficient context exists for the query. At operation 307, the second agent 312 can decide that sufficient content does not exist and can instruct the first generative model 310 via the workflow controller 214 to conduct operation 309. At operation 309, the first generative model 310 can conduct a chatbot interaction with the user 302 via the interface controller 112 (e.g., of FIG. 1) to obtain user input from which additional context can be derived or extracted by the second agent 312. At operation 311, the agent 312 can identify sufficient context, and the agent 312 can send the matchmaking model processor 140 the query 306. At operation 315, the matchmaking model processor 140 can send the query 306 to the information retrieval processor 316 and can instruct the information retrieval processor 316 to identify context documents 314 that match the query 306 according to the similarity determinations as discussed herein. At operation 323, the information retrieval processor can provide the context documents to the preprocessor 320. At operation 325, the preprocessor can process the documents into one more formats, the one or more formats can include JavaScript Object Notation (JSON), Portable Data Format (PDF), any such text file format, or a combination thereof. At operation 327, the preprocessor 320 can remove data from the documents 322. The data that can be removed from the documents can include one or more names of individuals, addresses, names of companies, names of universities, e-mails, genders, ethnicities, social security numbers, any such similar data, or a combination thereof. At operation 329 the preprocessor can clean the data of the documents 322 such that the data of the documents 322 does not contain special characters or irrelevant data according to the similarity determinations as discussed herein. At operation 331, the preprocessor 320 can provide the documents 322 to the data enhancer 324. At operation 333, the data enhancer 324 can summarize the data in the documents 322. In some examples, the documents 322 can include a resume and the data enhancer 324 can summarize the data in the documents 322 by summarizing the experience, skills and industry of the resume. At operation 335, the data enhancer 324 can extract data from the documents 322. In some examples, the data enhancer 324 can extract skills from the documents 322 and determine if the skills extracted are described in the documents 322. At operation 337, the data enhancer 324 can classify the data in the documents 322. In some examples, the data enhancer 324 can classify the data in the documents using the experience content located in the documents 322 to determine which industry the documents align with. At operation 323, the preprocessor 320 can provide the documents 322 to the context documents 314 after the documents 322 have been preprocessed by the preprocessor 320 and enhanced by the data enhancer 324.

At operation 319, the information retrieval processor 316 can identify the context documents 314 that match the query 306 according to the similar determinations as discussed herein, and the information retrieval processor 316 can provide the documents to the specialized knowledge database 318 in order to classify the documents and create questions for search indexing. At operation 321, the information retrieval processor 316 can retrieve information that corresponds to or matches the query 306 according to the similar determinations as discussed herein. At operation 317, the information retrieval processor 316 can provide information retrieved from the specialized knowledge database 318 and the context documents 314 to the matchmaking model processor 140.

At operation 313, if the matchmaking model processor 140 fails to identify matches or that output of the matchmaking model processor 140 indicates a lack of sufficient context to obtain any context documents 314 or information from the specialized knowledge database 318, the matchmaking model processor 140 via the workflow controller 214 can instruct the first generative model 310 to conduct a chatbot interaction with the user 302 via the interface controller 112 to obtain user input from which additional context can be derived or extracted by the first agent 308. The additional context can be used to aid the matchmaking model processor 140 to find information that matches the query 306 according to similar determinations as discussed herein.

At operation 339, the matchmaking model processor 140 can determine if the one or more context documents 314 and information retrieved via the information retrieval processor 316 match the query 306 according to the similar determinations as discussed herein. Further at operation 339, the matchmaking processor 140 can provide the one or more context documents 314 matching the query 306 to the third agent 326. At operation 341, the third agent 326 can provide the one or more context documents 314 matching the query 306 to the second generative model 328. At operation 347, in response to receiving one or more context documents 314, the second generative model 328 can generate a response 332 in natural language that includes generated text indicative of reasoning (e.g., a description of similarity analyses that returned the results) for returning the results. For example, the response 332 can include text such as "Here are the most suited Projects for you, John. <list of projects> <reasoning text>." At operation 355, the second generative model 328 can send or provide the response 332 to the user 302. At operation 351, the second generative model 328 can provide the response 332 labeled as response history to the chat history and context 336.

At operation 343, the third agent 326 can indicate that the one or more context documents 314 matching the query 306 needs additional context and instructs via the workflow controller 214 the third generative model 310 to conduct a chatbot interaction via the interface controller 112 to obtain user input from which additional context can be derived or extracted by the first agent 308. At operation 345, the third generative model 330 can investigate with reasoning why there is not enough criteria in the query 306 to define a match between the query 306 and the context documents 314 by generating an inquiry 334. For example, the inquiry 334 can include a text query of "What kind of projects are you interested in, John?". At operation 349, after generating the inquiry 334, the third generative model 330 can interact with the user 302 to obtain additional context. In some examples, the third generative model 330 can interact with the user 302 by providing the inquiry 334 to the user 302. At operation 351, the third generative model 330 can provide the inquiry 334 to the chat history and context 336. Further, in operation 351, the inquiry 334 can be labeled as a response or investigation history when provided to the chat history and context 336. At operation 357, the first generative model 310 can provide the small talk 304 to the chat history and context 336. Further, in operation 357, the small talk 304 can be labeled as small talks history when provided to the chat history and context 336.

The workflow can be conducted iteratively at least as illustrated in FIG. 3, including multiple pathways for the first agent 308, the second agent 312 or the third agent 326 to obtain, via the workflow controller 214, additional context from the user or from a data storage including chat history and context. For example, the chat history and context 336 can be associated with (e.g., via one or more tags or by identification of tokens associated with named entities) one or more users or domains. The first agent 308, the second agent 312 or the third agent 326 can obtain additional context from the chat history and context 336 data at multiple points in the workflow 300, to provide a technical solution to enrich content and a technical improvement to increase accuracy of document search results while reducing use of computational resources by reducing the number of queries required to be generated and transmitted to a user device. Reducing the amount of computational resources consumed by the generative models or the generative artificial intelligence processors can be significant in terms of processing time and power consumption, due to the large number of computations that can be required to create generative output.

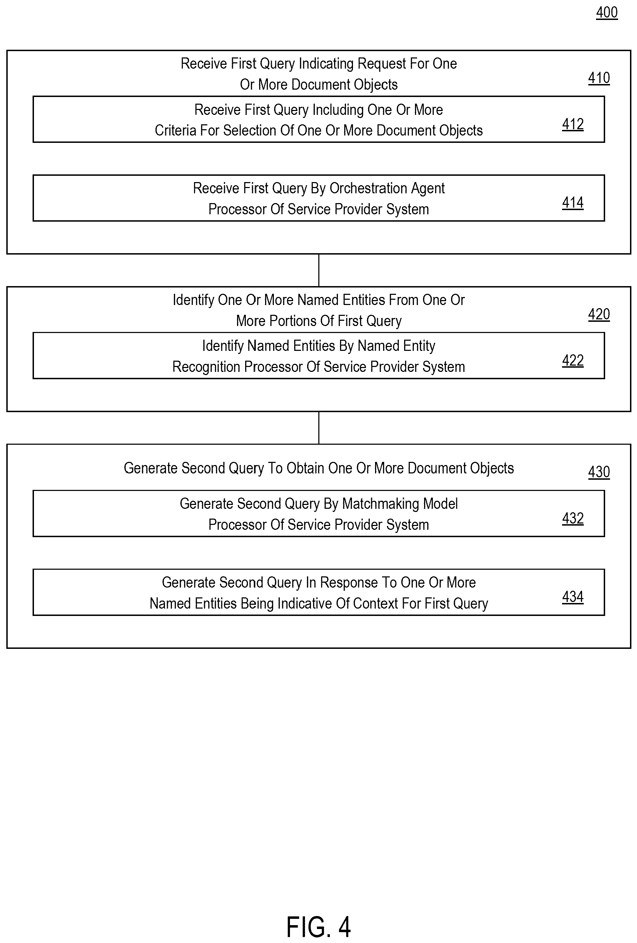

FIG. 4 depicts an example method of conversational agnostic matchmaking model architecture, according to this disclosure. At least one of the system 100, the service provider system 102, the client system 103, or any combination thereof, or any component thereof, can perform method 400. At 410, the method 400 includes receiving a first query indicating a request for one or more document objects. At 412, the method 400 can include receiving the first query including one or more criteria for selection of the one or more document objects. At 414, the method 400 includes receiving the first query by an orchestration agent processor of a service provider system. In some examples, the method 400 can include augmenting, by the orchestration agent processor 120, the context according to data indicative of a chat history, in response to receiving the first query. In some examples, the system 100 can augment, by the orchestration agent processor 120, the context according to data indicative of a chat history, in response to receiving the first query.

At 420, the method 400 can include identifying one or more named entities from one or more portions of the first query. At 422, the method 400 can include identifying the named entities by a named entity recognition processor of the service provider system. In some examples, the method 400 can include determining, by the orchestration agent processor 120, whether the one or more named entities are indicative of the context for the query. In some examples, the system 100 can include determining, by the orchestration agent processor 120, whether the one or more named entities are indicative of the context for the query. In some examples, the context is indicative of a set of document objects can include the one or more document objects. In some examples, the method 400 can include augmenting, by the generative artificial intelligence processor, the context according to data indicative of a chat history, in response to the one or more named entities not being indicative of the context. In some examples, the system 100 can include augmenting, by the generative artificial intelligence processor 150, the context according to data indicative of a chat history, in response to the one or more named entities not being indicative of the context. In some examples, the method 400 can include augmenting, by the orchestration agent processor 120, the context according to data indicative of a chat history, in response to the identifying the one or more named entities. In some examples, the system 100 can include augmenting, by the orchestration agent processor 120, the context according to data indicative of a chat history, in response to the identifying the one or more named entities.

At 430, the method 400 can include generating a second query to obtain the one or more document objects. At 432, the method 400 can include generating the second query by a matchmaking model processor of the service provider system. At 434, the method 400 can include generating the second query in response to the one or more named entities being indicative of a context for the first query. In some examples, the system 100 can process the one or more data objects. In some examples, the system 100 can enhance, using a model trained with machine learning, the one or more document objects.

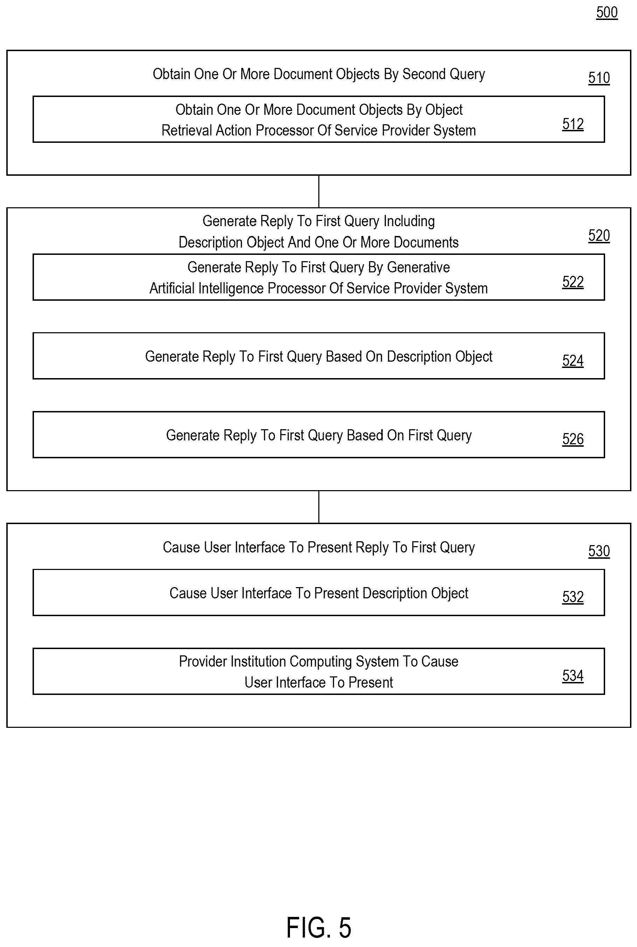

FIG. 5 depicts an example method of conversational agnostic matchmaking model architecture, according to this disclosure. At least one of the system 100, the service provider system 102, the client system 103, or any combination thereof, or any component thereof, can perform method 500. At 510, the method 500 can obtain the one or more document objects according to the second query. At 512, the method 500 can obtain the one or more document objects by an object retrieval action processor of the service provider system.

At 520, the method 500 can generate a reply to the first query, including a description object and the one or more documents. At 522, the method 500 can generate the reply to the first query using a generative artificial intelligence processor of the service provider system. At 524, the method 500 includes generating a reply to the first query based on the description object. At 526, the reply to the first query is generated based on the first query. **In** some examples, the method 500 can include generating, by the generative artificial intelligence processor 150 of the service provider system 102, the reply to the first query including the description object and the one or more documents, in response to the reply to the second query indicating the match. **In** some examples, the system 100 can generate, by the generative artificial intelligence processor 150 of the service provider system 102, the reply to the first query can include the description object and the one or more documents, in response to the reply to the second query indicating the match.

In some examples, the method 500 can include generating, by the generative artificial intelligence processor 150, a second reply to the first query indicating a request for information indicative of the context, in response to the one or more named entities not being indicative of the context. The method 500 can include causing, by the service provider system102, the user interface 172 to present the second reply. In some examples, the system 100 can generate, by the generative artificial intelligence processor 150, a second reply to the first query indicating a request for information indicative of the context, in response to the one or more named entities not being indicative of the context. The system 100 can cause, by the service provider system 102, the user interface 172 to present the second reply.

In some examples, the method 500 can include determining, by the matchmaking model processor 140, whether a reply to the second query indicates a match corresponding to the one or more documents. In some examples, the system 100 can determine, by the matchmaking model processor 140, whether a reply to the second query indicates a match corresponding to the one or more documents. In some examples, the match indicates that at least one of a set of document objects is obtained from a memory associated with the service provider system according to the second query. In some examples, the method 500 can include generating, by the generative artificial intelligence processor 150 of the service provider system 102, an investigative reply to the first query, including a request structured to identify the context, in response to the reply to the second query not indicating the match. In some examples, the system 100 can generate, by the generative artificial intelligence processor 150 of the service provider system 102, an investigative reply to the first query, including a request structured to identify the context, in response to the reply to the second query not indicating the match.

At 530, the method 500 can include causing a user interface to present the reply to the first query. At 532, the method 500 can include causing the user interface to present the description object. At 534, the method 500 can include the service provider system causing the user interface to present the reply to the first query.

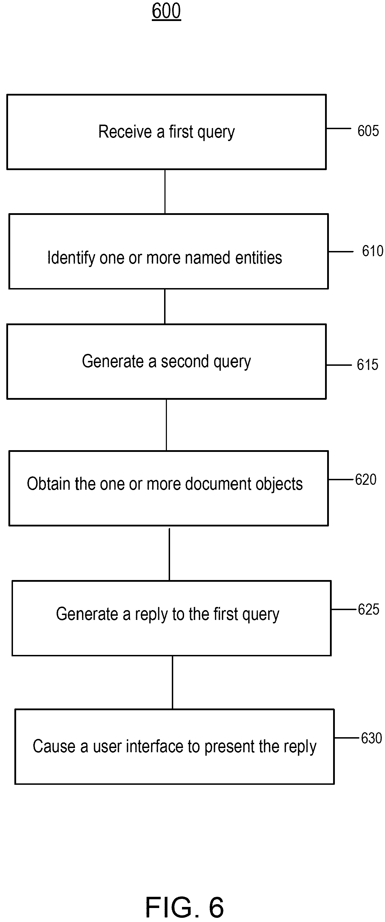

FIG. 6 shows a flow diagram of a method 600 for using a conversational agnostic matchmaking model. Method 600 can be implemented using the system tools, devices, features, actions, and components discussed in FIGS. 1-3 and 7. For instance, the method 600 can be implemented using one or more computing systems 700 providing processors 710 that can be configured using instructions, computer code, and data stored in memories 715, 720 or 725 to configure or cause the processors 710 to perform any one or more acts or operations of the method 600.

Method 600 can include acts or operations 605-625. At act 605, the method can include receiving a first query. At act 610, the method can include identifying one or more named entities. At act 615, the method can include generating a second query. At act 620, the method can include obtaining the one or more document objects. At 625, the method can include generating a reply to the first query. At 630, the method can include causing a user interface to present the reply.

At act 605, the method can include receiving a first query. The method can include receiving, by one or more processors coupled with memory, a first query indicating a request for one or more document objects and including one or more criteria for selection of the one or more document objects. The method can include one or more processors coupled with memory determining whether the one or more named entities are indicative of the context for the first query. The method can include augmenting the context according to data indicative of a chat history, in response to the receiving the first query. The method can include augmenting the context according to data indicative of a chat history, in response to identifying the one or more named entities.

At act 610, the method can include identifying one or more named entities. The method can include identifying one or more named entities from one or more portions of the first query.

At act 615, the method can include generating a second query. The method can include generating a second query to obtain the one or more document objects, in response to the one or more named entities being indicative of a context for the first query. The method can include determining whether a reply to the second query indicates a match corresponding to the one or more document objects. The method can include processing the one or more document objects.

At act 620, the method can include obtaining the one or more document objects. The method can include obtaining the one or more document objects according to the second query.

At act 625, the method can include generating a reply to the first query. The method can include generating a reply to the first query, including a description object and the one or more document objects, the description object based on the first query. The method can include generating a second reply to the first query, the second reply indicative of a request for information indicative of the context, in response to the one or more named entities not being indicative of the context. The method can include causing the user interface to present the second reply. The method can include augmenting the context according to data indicative of a chat history, in response to the one or more named entities not being indicative of the context. The method can include generating the reply to the first query including the description object and the one or more document objects, in response to the reply to the second query indicating the match. The method can include enhancing, using a model trained with machine learning, the one or more document objects. The several acts of the method 500 can be performed by one or more processors coupled with memory.

At act 630, the method can include causing a user interface to present the reply. The method can include one or more processors coupled with memory, causing a user interface to present the reply to the first query and the description object.

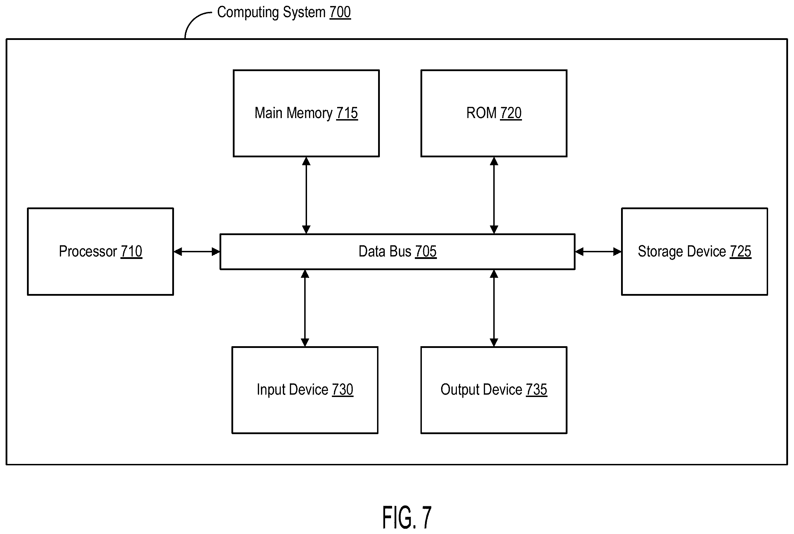

FIG. 7 depicts an illustrative architecture of a computing system 700. The block diagram of the example computing system 700 can also be referred to as the computer system 700 or a computing environment 700. Computing system 700 can be used to implement elements of the systems and methods described and illustrated herein, such as commands, instructions, or data described herein. Computing system 700 can be included in or run any device (e.g., a service provider system 102, client system 103, system processor 110, interface controller 112, orchestration agent processor 120, named entity recognition processor 130, matchmaking model processor 140, generative AI processor 150, object retrieval action processor 160, token processor 170, user interface 172, interface controller 174, model 180, network 101 etc.).

Computing system 700 can include at least one bus data bus 705 or other communication device, structure or component for communicating information or data. Computing system 700 can include at least one processor 710 or processing circuit coupled to the data bus 705 for executing instructions or processing data or information. Computing system 700 can include one or more processors 710 or processing circuits coupled to the data bus 705 for exchanging or processing data or information along with other computing systems 700. Computing system 700 can include one or more main memories 715, such as a random-access memory (RAM), dynamic RAM (DRAM), cache memory, or other dynamic storage device, which can be coupled to the data bus 705 for storing information, data and instructions to be executed by the processor(s) 710. Main memory 715 can be used for storing information (e.g., data, computer code, commands, or instructions) during the execution of instructions by the processor(s) 710.

Computing system 700 can include one or more read only memories (ROMs) 720 or other static storage device 725 coupled to the bus 705 for storing static information and instructions for the processor(s) 710. Storage devices 725 can include any storage device, such as a solid state device, magnetic disk, or optical disk, which can be coupled to the data bus 705 to persistently store information and instructions.

Computing system 700 can be coupled via the data bus 705 to one or more output devices 735, such as speakers or displays (e.g., liquid crystal display or active matrix display) for displaying or providing information to a user. Input devices 730, such as keyboards, touch screens, or voice interfaces, can be coupled to the data bus 705 for communicating information and commands to the processor(s) 710. Input device 730 can include, for example, a touch screen display (e.g., output device 735). Input device 730 can include a cursor control, such as a mouse, a trackball, or cursor direction keys, for communicating direction information and command selections to the processor(s) 710 for controlling cursor movement on a display.

The processes, systems and methods described herein can be implemented by the computing system 700 in response to the processor 710 executing an arrangement of instructions contained in main memory 715. Such instructions can be read into main memory 715 from another computer-readable medium (CRM), which may be non-transitory, such as the storage device 725. Execution of the arrangement of instructions stored thereon main memory 715 causes the computing system 700 to perform the illustrative processes described herein. One or more processors 710 in a multi-processing arrangement can also be employed to execute the instructions contained in main memory 715. Hard-wired circuitry can be used in place of or in combination with software instructions together with the systems and methods described herein. Systems and methods described herein are not limited to any specific combination of hardware circuitry and software.

Although an example computing system has been described in FIG. 7, the subject matter including the operations described in this specification can be implemented in other types of digital electronic circuitry, or in computer software, firmware, or hardware, including the structures disclosed in this specification and their structural equivalents, or in combinations of one or more of them.

Having now described some illustrative implementations, the foregoing is illustrative and not limiting, having been presented by way of example. In particular, although many of the examples presented herein involve specific combinations of method acts or system elements, those acts and those elements may be combined in other ways to accomplish the same objectives. Acts, elements and features discussed in connection with one implementation are not intended to be excluded from a similar role in other implementations.

The phraseology and terminology used herein is for the purpose of description and should not be regarded as limiting. The use of "including," "comprising," "having," "containing," "involving," "characterized by," "characterized in that," and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both "A' and 'B'. Such references used in conjunction with "comprising" or other open terminology can include additional items. References to "is" or "are" may be construed as nonlimiting to the implementation or action referenced in connection with that term. The terms "is" or "are" or any tense or derivative thereof, are interchangeable and synonymous with "can be" as used herein, unless stated otherwise herein.

Directional indicators depicted herein are example directions to facilitate understanding of the examples discussed herein, and are not limited to the directional indicators depicted herein. Any directional indicator depicted herein can be modified to the reverse direction, or can be modified to include both the depicted direction and a direction reverse to the depicted direction, unless stated otherwise herein. While operations are depicted in the drawings in a particular order, such operations are not required to be performed in the particular order shown or in sequential order, and all illustrated operations are not required to be performed. Actions described herein can be performed in a different order. Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any clam elements.

Scope of the systems and methods described herein is thus indicated by the appended claims, rather than the foregoing description. The scope of the claims includes equivalents to the meaning and scope of the appended claims.

## Claims

1. A system, comprising:
one or more processors, coupled with memory, to:
receive a first query indicating a request for one or more document objects and including one or more criteria for selection of the one or more document objects;
identify one or more named entities from one or more portions of the first query;
generate a second query to obtain the one or more document objects, in response to the one or more named entities being indicative of a context for the first query;
obtain the one or more document objects according to the second query;
generate a reply to the first query including a description object and the one or more document objects, the description object based on the first query; and
cause a user interface to present the reply to the first query and the description object.

2. The system of claim 1, comprising the one or more processors to:
generate, by a generative artificial intelligence processor, a second reply to the first query indicating a request for information indicative of the context, in response to the one or more named entities not being indicative of the context; and
cause the user interface to present the second reply.

3. The system of claim 1 or 2, comprising the one or more processors to:
augment, by a generative artificial intelligence processor, the context according to data indicative of a chat history, in response to the one or more named entities not being indicative of the context.

4. The system of any preceding claim, comprising the one or more processors to:
determine, by an orchestration agent processor, whether the one or more named entities are indicative of the context for the first query; and/or
wherein the context is indicative of a set of document objects including the one or more document objects.

5. The system of any preceding claim, comprising the one or more processors to:
determine, by a matchmaking model processor, whether a reply to the second query indicates a match corresponding to the one or more document objects.

6. The system of claim 56, wherein the match indicates that at least one of a set of document objects is obtained from the memory according to the second query.

7. The system of claim 5 or 6, comprising the one or more processors to:
generate, by a generative artificial intelligence processor executed by the one or more processors, the reply to the first query including the description object and the one or more document objects, in response to the reply to the second query indicating the match; or
generate, by a generative artificial intelligence processor executed by the one or more processors, an investigative reply to the first query including a request structured to identify the context, in response to the reply to the second query not indicating the match.

8. The system of any preceding claim, comprising the one or more processors to:
augment, by an orchestration agent processor, the context according to data indicative of a chat history, in response to the receiving the first query or
augment, by an orchestration agent processor, the context according to data indicative of a chat history, in response to the identifying the one or more named entities.

9. The system of any preceding claim, comprising the one or more processors to:
process the one or more document objects; and
enhance, using a model trained with machine learning, the one or more document objects.

10. A method, comprising:
receiving, by one or more processors coupled with memory, a first query indicating a request for one or more document objects and including one or more criteria for selection of the one or more document objects;
identifying, by the one or more processors, one or more named entities from one or more portions of the first query;
generating, by the one or more processors, a second query to obtain the one or more document objects, in response to the one or more named entities being indicative of a context for the first query;
obtaining, by the one or more processors, the one or more document objects according to the second query;
generating, by the one or more processors, a reply to the first query including a description object and the one or more document objects, the description object based on the first query; and
causing, by the one or more processors, a user interface to present the reply to the first query and the description object.

11. The method of claim 10, further comprising:
generating, by the one or more processors, a second reply to the first query indicating a request for information indicative of the context, in response to the one or more named entities not being indicative of the context; and
causing, by the one or more processors, the user interface to present the second reply.

12. The method of claim 10 or 12, further comprising:
augmenting, by the one or more processors, the context according to data indicative of a chat history, in response to the one or more named entities not being indicative of the context.

13. The method of any of claims 10 to 15, further comprising:
determining, by the one or more processors, whether the one or more named entities are indicative of the context for the first query; and/or
wherein the context is indicative of a set of document objects including the one or more document objects.

14. The method of claim 13, further comprising:
determining, by the one or more processors, whether a reply to the second query indicates a match corresponding to the one or more document objects; and optionally
wherein the match indicates that at least one of a set of document objects is obtained from the memory according to the second query.

15. A computer readable medium including one or more instructions stored thereon and executable by one or more processors to carry out the method of any of claims 10 to 14.
